# FASCICULE DE BREVET EUROPEEN

(11) **EP 4 687 026 B1**
(45) Date de publication et mention de la délivrance du brevet: **12.08.2026**
(21) Numéro de dépôt: 25191732.4
(22) Date de dépôt: 25.07.2025
(51) Int. Cl.: G06F 7/58

(54) **DISPOSITIF ELECTRONIQUE POUR LA GENERATION DE NOMBRES ALEATOIRES**
ELEKTRONISCHE VORRICHTUNG ZUR ERZEUGUNG VON ZUFALLSZAHLEN
ELECTRONIC DEVICE FOR GENERATING RANDOM NUMBERS

(30) Priorité: 02.08.2024 FR 2408601
(43) Date de publication de la demande: 04.02.2026
(73) Titulaire: Commissariat à l'Energie Atomique et aux Energies Alternatives, 75015 Paris (FR)
(72) Inventeur: BENEA, Licinius-Pompiliu, 38054 GRENOBLE CEDEX 09 (FR); PEBAY-PEYROULA, Florian, 38054 GRENOBLE CEDEX 09 (FR); WACQUEZ, Romain, 38054 GRENOBLE CEDEX 09 (FR); CARMONA, Mikael, 38054 GRENOBLE CEDEX 09 (FR)
(74) Mandataire: Cabinet Beaumont

(56) Documents cités:
- US-A1- 2023 370 058
- US-A1- 2024 128 957
- US-A1- 2024 201 954

## Description

### Domaine technique

La présente description concerne de façon générale les circuits électroniques, et plus particulièrement les sources d'entropie mises en œuvre dans les circuits électroniques pour générer des nombres aléatoires.

### Technique antérieure

De nombreux circuits électroniques mettent en œuvre une fonction de génération de nombres aléatoires (TRNG de l'anglais "True Random Number Generation"). Pour cela, ces circuits disposent d'une source d'entropie à partir de laquelle est extraite une information aléatoire ou aléa. Cette information aléatoire, aussi appelée, par exemple, mesurande, est ensuite utilisée pour générer des nombres aléatoires. A titre d'exemple, les nombres aléatoires ainsi obtenus sont utilisés pour générer des clefs de chiffrement, des signatures, etc.

Des sources d'entropie connues sont basées sur la gigue ("jitter" en anglais) d'un oscillateur en anneau. Les oscillateurs en anneau sont très utilisés en vertu de leur simplicité et de la forte connaissance de leurs modèles théoriques. L'incertitude (ou gigue) sur la période réelle d'un signal de sortie d'un oscillateur en anneau par rapport à la période théorique de ce signal est exploitée comme source d'aléa. Cette incertitude augmente avec le nombre de périodes accumulées (ou de manière équivalente le temps d'accumulation).

Les phénomènes physiques qui sont à l'origine de la gigue sont bien documentés dans la littérature. Le modèle généralement utilisé comme base théorique est celui proposé par Hajimiri et al. dans l'article "Jitter and phase noise in ring oscillators" de la revue IEEE J. Solid-State Circuits, vol. 34, no 6, de juin 1999. Ce modèle définit la fonction de susceptibilité du signal de sortie d'un oscillateur en anneau à générer du bruit de phase face à une perturbation. Plus concrètement, seule une perturbation survenue pendant les phases transitoires (de montée ou de descente) du signal de sortie est capable d'induire un bruit de phase dans ce signal. Par ailleurs, le modèle décrit l'effet des différentes sources physiques de bruit sur la gigue accumulée. Ces phénomènes se déclinent en un bruit thermique provenant de l'agitation thermique et en un bruit de scintillement ("flicker" en anglais) induit par la charge/décharge des pièges de l'oxyde de grille, ou, dit autrement, par le piégeage/dépiégeage de charges dans l'oxide de grille, des transistors métal-oxyde semiconducteur (MOS de l'anglais "Metal Oxide Semiconductor") mettant en œuvre l'oscillateur en anneau ou par la diffusion des porteurs dans le canal de ces transistors. En effet, la gigue accumulée présente deux régions : une région variant linéairement avec la variance de la gigue, qui correspond au bruit thermique, et une région variant quadratiquement avec la variance de la gigue, qui correspond au bruit de scintillement.

Pour utiliser la gigue comme source d'entropie pour la génération de nombres vraiment aléatoires, il est généralement admis que seule la composante thermique de la gigue est intéressante car elle est la seule complètement aléatoire, et que la composante du bruit de scintillement n'est pas intéressante car le bruit de scintillement est auto corrélé et néfaste quant à la prédictibilité de l'aléa généré.

Ainsi, dans les circuits décrits ci-dessus où la source d'entropie pour générer des nombres aléatoires est basée sur la gigue d'un oscillateur en anneau, il est souhaitable de caractériser la source d'entropie, c'est à dire la gigue, pour discriminer l'amplitude de la composante thermique de la gigue.

Il existe des méthodes embarquées pour caractériser, dans un circuit, une source d'entropie basée sur la gigue d'un premier oscillateur en anneau du circuit en utilisant un deuxième oscillateur du circuit qui est identique au premier. Par exemple, les deux oscillateurs sont dits identiques l'un à l'autre lorsqu'ils sont identiques par conception.

Une première méthode est présentée dans l'article "On the assumption of mutual independence of jitter realizations in P-TRNG stochastic models", de P. Haddad, Y. Teglia, F. Bernard, et V. Fischer, présenté dans "Design, Automation & Test in Europe Conference & Exhibition (DATE)", en 2014, à Dresden. Cette première méthode consiste à compter, avec un compteur, le nombre d'oscillations du premier oscillateur RO1 pendant Q oscillations du deuxième oscillateur, le facteur Q étant obtenu par le biais d'un diviseur de fréquence recevant le signal de sortie du deuxième oscillateur comme signal d'entrée. Le compteur est incrémenté par le signal de sortie du premier oscillateur et réinitialisé toutes les Q périodes du signal de sortie du deuxième oscillateur, au moyen du signal de sortie du diviseur de fréquence par Q. La gigue est ensuite caractérisée en utilisant la variance d'Allan calculée sur les sorties du compteur. La variance d'Allan est la variance calculée sur la différence entre deux valeurs consécutives, ici deux valeurs consécutives de sortie du compteur, et permet de contourner les problèmes reliés à la convergence des modèles tout en respectant une condition de stationnarité. La variance d'Allan est tracée en fonction du nombre Q de périodes d'accumulation et suit alors une loi (ou courbe ou fonction) très similaire à celle du modèle proposé par Hajimiri. Plus exactement, la variance d'Allan tracée en fonction du facteur Q comprend une partie linéaire correspondant au bruit thermique, une partie quadratique correspondant au bruit de scintillement, et un plancher de bruit correspondant au bruit de quantification inhérent à toute acquisition. En effectuant une régression quadratique de la courbe tracée pour l'approximer par une fonction du type σ(Q)^2=a0+a1.Q+a2.Q ^2, avec σ(Q) la variance d'Allan en fonction de l'accumulation Q, il est possible d'obtenir les coefficients a0, a1 et a2 qui représentent les coefficients respectivement pour le bruit de quantification, pour le bruit thermique et pour le bruit de scintillement. Obtenir les coefficients a0, a1 et a2 revient donc à caractériser la source d'entropie, c'est à dire la gigue du premier oscillateur.

Toutefois, cette première méthode présente l'inconvénient que la contribution du circuit diviseur de fréquence sur le bruit final n'est pas connue.

De plus, dans cette première méthode, la caractérisation de la gigue du premier oscillateur est mise en œuvre par un circuit disposé à côté du traitement de la source d'entropie, qui nécessite une surface additionnelle importante, notamment pour mettre en œuvre la régression quadratique.

Une deuxième méthode est présentée dans l'article " Embedded Evaluation of Randomness in Oscillator Based Elementary TRNG", de V. Fischer et D. Lubicz, présenté dans "Advanced Information Systems Engineering", vol. 7908, Springer Berlin Heidelberg, 2014, p. 527-543. Cette méthode consiste à échantillonner le signal de sortie du premier oscillateur avec une bascule synchrone de type D ("D flip flop" en anglais) cadencée à la fréquence du deuxième oscillateur. Le signal de sortie de la bascule est alors un signal périodique dont la période moyenne Tm est inversement proportionnelle à la différence entre les périodes des deux oscillateurs. Plus particulièrement, la longueur de la période Tm en nombre Nm de périodes du signal de l'oscillateur est telle que Nm = T1/(T1-T2), avec T1 et T2 la valeur moyenne des périodes des premier et deuxième oscillateurs respectivement. Ensuite, une variance est calculée sur la résultante d'une opération OU EXCLUSIF entre deux valeurs du signal de sortie de la bascule séparée l'une de l'autre par G périodes du deuxième oscillateur. La variance en fonction de G a alors deux parties, une partie variant linéairement avec G, qui correspond au bruit thermique, et une partie variant quadratiquement avec G, qui correspond au bruit de scintillement. De la même façon que précédemment, il est possible de caractériser la source d'entropie, donc la gigue du premier oscillateur, en effectuant une régression quadratique de la variance tracée en fonction de G.

Toutefois, cette deuxième méthode présente l'inconvénient d'être basée sur des rapports de fréquence Nm/G qui ne sont pas contrôlés mais subis, et par conséquent la précision de cette deuxième méthode est faible et incontrôlable entre des circuits différents.

De plus, dans cette deuxième méthode, comme pour la première méthode, la caractérisation de la gigue du premier oscillateur est mise en œuvre par un circuit disposé à côté du traitement de la source d'entropie, qui nécessite une surface additionnelle importante.

Il a été proposé dans la demande de brevet FR 3134795 et dans la demande de brevet US 202401954, un dispositif pour pallier aux inconvénients des deux méthodes décrites ci-dessus. Le dispositif proposé dans ces demandes est similaire au dispositif utilisé dans la deuxième méthode. Dit autrement, le dispositif proposé est du type générateur de nombres aléatoires basé sur un oscillateur à échantillonnage cohérent (COSO-TRNG de l'anglais "COherent-Sampling Oscillator based TRGN). Dans ces demandes, les oscillateurs sont mis en œuvre en technologie SOI ("Semiconductor On Insulator" - semiconducteur sur isolant). Dans le dispositif, un compteur reçoit un signal de sortie d'une bascule échantillonnant le premier oscillateur à la fréquence du deuxième oscillateur. En outre, le compteur est configuré pour compter un nombre N de périodes du deuxième oscillateur pendant chaque période du signal de sortie de la bascule. Dans le dispositif, il est en outre prévu un circuit permettant de régler la période d'au moins l'un des deux oscillateurs, de sorte à régler l'écart moyen entre la période moyenne de chacun des deux oscillateurs. Dit autrement, il est possible de régler la période du signal de sortie de la bascule, donc la valeur moyenne Nm de sortie du compteur. Un circuit caractérise l'entropie de la source d'entropie à partir des valeurs de sortie N du compteur, en calculant une variance d'Allan sur ces valeurs de sortie N. Une fois l'entropie caractérisée, une valeur K d'accumulation des valeurs N de sortie du compteur est choisie sur la base d'une entropie minimum cible, de sorte qu'un bit de poids faible d'une valeur correspondant à l'accumulation de K valeurs N de sortie du compteur puisse être utilisé comme bit aléatoire pour la génération de nombres aléatoires. Dans le dispositif proposé dans ces demandes, il est également prévu un ou plusieurs circuits d'alarme permettant de détecter un disfonctionnement de la source d'entropie.

Bien que ce dispositif résolve au moins certains problèmes des première et deuxième méthodes décrites ci-dessus, au moins trois valeurs d'accumulation différentes des valeurs N de sortie du compteur sont utilisées pour caractériser l'entropie. En outre, une fois l'entropie caractérisée, encore une autre valeur d'accumulation des valeurs N de sortie du compteur est sélectionnée et utilisée pour générer un bit aléatoire. Cela rend le dispositif complexe.

### Résumé de l'invention

Il existe un besoin de pallier tout ou partie des inconvénients des dispositifs connus comprenant une source d'entropie basé sur la gigue d'un oscillateur en anneau.

Un mode de réalisation pallie tout ou partie des inconvénients des dispositifs connus comprenant une source d'entropie basé sur la gigue d'un oscillateur en anneau.

Un mode de réalisation prévoit un dispositif électronique comprenant :
- un premier oscillateur en anneau et un deuxième oscillateur en anneau ;
- une bascule synchrone configurée pour fournir un signal de sortie correspondant à un échantillonnage d'une sortie du premier oscillateur à une fréquence d'une sortie du deuxième oscillateur ;
- un compteur configuré pour fournir, pour chaque période du signal de sortie de la bascule, une valeur égale à un nombre de périodes du deuxième oscillateur comptées pendant ladite période du signal de sortie de la bascule ;
- un premier circuit configuré pour modifier une période d'au moins l'un des deux oscillateurs pour qu'un écart moyen entre les périodes des deux oscillateurs soit égal à un écart cible ; et
- un deuxième circuit configuré pour :
   initialiser une valeur d'un nombre entier K,
   calculer des sommes de K valeurs successives du compteur,
   calculer une variance d'Allan sur les sommes calculées, et
   fixer K à sa valeur courante si la variance calculée est supérieure à un premier seuil et incrémenter K sinon,
   dans lequel le premier seuil est égal au plus grand d'un deuxième seuil déterminé par une entropie cible sur un bit de poids faible des sommes calculées et d'un troisième seuil déterminé par un seuil d'autocorrélation sur ledit bit.

Selon un mode de réalisation, les premier et deuxième oscillateurs en anneau sont identiques, par exemple, par conception.

Selon un mode de réalisation, le premier circuit est configuré pour modifier ladite période dudit au moins l'un des deux oscillateurs sur la base des valeurs du compteur.

Selon un mode de réalisation, le troisième seuil est égal à 0.25.

Selon un mode de réalisation, le deuxième circuit comprend un circuit accumulateur configuré pour recevoir les valeurs du compteur, une indication de la valeur courante du nombre K et pour fournir lesdits sommes sous la forme d'un mot numérique.

Selon un mode de réalisation, le dispositif comprend en outre un troisième circuit configuré pour fournir un premier signal d'alarme si la variance calculée est en dehors d'une plage de valeurs déterminée par le premier seuil, la plage de valeurs comprenant, par exemple, toutes les valeurs supérieures ou égales à une première valeur déterminée par le premier seuil, la première valeur étant, par exemple, égale à 0.9 fois le premier seuil.

Selon un mode de réalisation, le dispositif comprend en outre un quatrième circuit configuré pour fournir un deuxième signal d'alarme si une valeur du compteur est supérieure à un seuil déterminé par l'écart cible.

Selon un mode de réalisation, les premier et deuxième oscillateurs en anneau sont mis en œuvre en technologie semiconducteur sur isolant, de préférence en technologie semiconducteur sur isolant complètement déplété, et le premier circuit est configuré pour commander des grilles arrière d'au moins un élément à retard dudit au moins l'un des deux oscillateurs pour modifier l'écart moyen entre les périodes des deux oscillateurs.

Selon un mode de réalisation, le premier circuit est configuré pour modifier ladite période dudit au moins l'un des deux oscillateurs pendant une première phase d'une étape de réglage.

Selon un mode de réalisation, le deuxième circuit est configuré pour fixer la valeur du nombre K pendant une deuxième phase de l'étape de réglage, mise en œuvre après la première phase.

Un mode de réalisation prévoit un générateur de nombres aléatoires comprenant le dispositif tel que décrit, dans lequel les nombres aléatoires sont générés à partir du bit de poids faible des sommes calculées.

Un mode de réalisation prévoit un procédé mis en œuvre dans un dispositif électronique comprenant un premier oscillateur en anneau et un deuxième oscillateur en anneau, une bascule synchrone configurée pour fournir un signal de sortie correspondant à un échantillonnage d'une sortie du premier oscillateur à une fréquence d'une sortie du deuxième oscillateur, et un compteur configuré pour fournir, pour chaque période du signal de sortie de la bascule, une valeur égale à un nombre de périodes du deuxième oscillateur comptées pendant ladite période du signal de sortie de la bascule, le procédé comprenant :
modifier avec un premier circuit une période d'au moins l'un des deux oscillateurs pour qu'un écart moyen entre les périodes des deux oscillateurs soit égal à un écart cible ;
initialiser avec un deuxième circuit une valeur d'un nombre entier K ;
calculer avec le deuxième circuit des sommes de K valeurs successives du compteur ; calculer avec le deuxième circuit une variance d'Allan sur les sommes calculées ; et
avec le deuxième circuit, fixer K à sa valeur courante si la variance calculée est supérieure à un premier seuil et incrémenter K sinon,
dans lequel le premier seuil est égal au plus grand d'un deuxième seuil déterminé par une entropie cible sur un bit de poids faible des sommes calculées et d'un troisième seuil déterminé par un seuil d'autocorrélation sur ledit bit.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, sous la forme d'un schéma bloc, un mode de réalisation d'un dispositif électronique ;
la figure 2 représente, sous la forme d'un organigramme, un mode de réalisation d'un procédé mis en œuvre dans le dispositif de la figure 1 ;
la figure 3 représente, sous la forme d'un schéma bloc, une variante de réalisation du dispositif de la figure 1.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les méthodes et circuits usuels utilisant une source d'entropie pour la génération de nombres vraiment aléatoires n'ont pas été détaillés, les modes de réalisation et variantes décrits ici étant compatibles avec ces méthodes et circuits usuels.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % ou à 10° près, de préférence à 5 % ou à 5° près.

Un dispositif comprenant des premier et deuxième oscillateurs en anneau identiques et une bascule échantillonnant le premier oscillateur à la fréquence du deuxième oscillateur est ici considéré. Dans un tel dispositif, dit de référence, les valeurs de sortie de la bascule sont accumulées et un bit de poids faible de la valeur accumulée est destiné à être utilisé comme bit aléatoire, par exemple dans un générateur de nombres aléatoires. Comme cela a été décrit précédemment, la valeur d'accumulation doit être soigneusement sélectionnée pour respecter une entropie minimale cible sur ce bit, et, en outre, de manière usuelle, pour se trouver dans plage de valeurs d'accumulations où la gigue est dominée par la composante thermique et non pas par la composante du bruit de scintillement.

Toutefois, dans le dispositif de référence, il a été montré par L. Benea, M. Carmona, V. Fischer, F. Pebay-Peyroula, et R. Wacquez, dans l'article « Impact of the Flicker Noise on the Ring Oscillator-based TRNGs », publié dans IACR Transactions on Cryptographic Hardware and Embedded Systems, vol. 2024, no 2, Art. no 2, mars 2024, par exemple en relation avec les figures 12, 13, 14 et 16 de cet article, comme cela est par exemple résumé en page 885 de l'article, que l'autocorrélation du bit aléatoire lié au bruit de scintillement peut être considérée comme nulle ou négligeable au-delà d'une valeur minimale d'accumulation. Cette valeur minimale d'accumulation correspond, par exemple, au moment où la variance d'Allan de la gigue ("jitter" en anglais) calculée sur les valeurs accumulées devient égale au carré de la moitié de la période moyenne des oscillateurs, et, de préférence, égale au carré de la moitié de la période moyenne de l'oscillateur échantillonnant.

Il est ici proposé de tirer profit de ce qui a été montré dans l'article susmentionné, de sorte à simplifier le dispositif et la méthode de caractérisation d'entropie. En particulier, il est ici proposé de tirer profit du fait que dans le dispositif de référence introduit ci-dessus, l'autocorrélation est nulle au-delà d'une valeur d'accumulation.

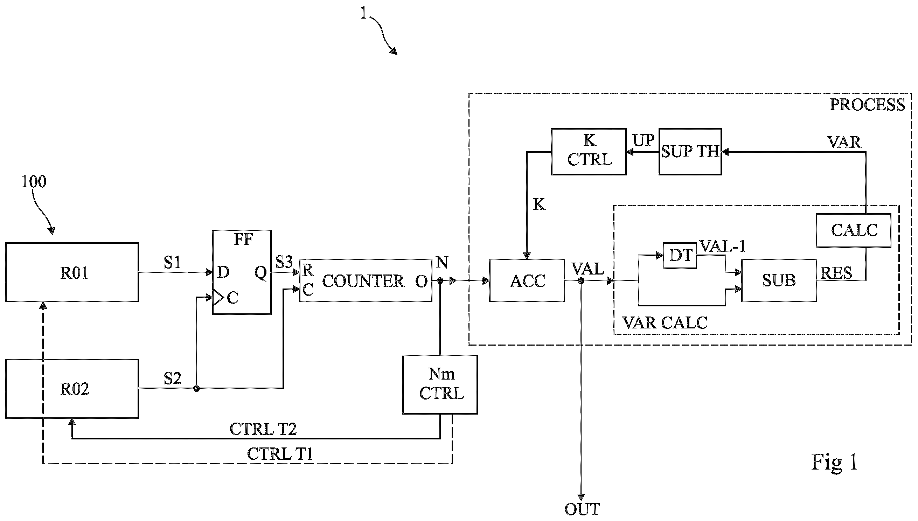

La figure 1 illustre, de manière schématique et sous la forme de blocs, un exemple d'un mode de réalisation d'un dispositif 1.

Le circuit 1 comprend deux oscillateurs en anneau identiques RO1 et RO2. L'oscillateur RO1, respectivement RO2, fournit un signal périodique de sortie S1, respectivement S2.

Le circuit 1 comprend en outre une bascule synchrone FF ("flip-flop" en anglais), par exemple de type D ("D flipflop" en anglais). La bascule FF est configurée pour échantillonner le signal S1 à la fréquence du signal S2.

Dit autrement, la bascule FF est configurée pour mettre à jour un signal de sortie S3 à chaque début de période du signal S2 avec la valeur binaire du signal S1, chaque début de période du signal S2 correspondant à un front actif du signal S2, par exemple un front montant. Entre deux mises à jour successives du signal S3, le signal S3 est maintenu à sa valeur courante, c'est à dire la valeur prise par le signal S3 lors de la première des deux mises à jour successive.

Par exemple, la bascule FF comprend une entrée D de donnée configurée pour recevoir le signal S1, une entrée C de synchronisation (cadencement) des mises à jour du signal S3 configurée pour recevoir le signal S2, et une sortie Q configurée pour fournir le signal S3.

Les deux oscillateurs RO1 et RO2 et la bascule FF forment une source d'entropie 100. L'aléa extrait de la source d'entropie 100 est généré à partir de la valeur de la période T du signal S3. Le signal S3 est un signal périodique ayant une période moyenne Tm dont la durée moyenne Nm en nombre de période du signal S2 est inversement proportionnelle à la différence entre les périodes T1 et T2, selon la formule Nm = T1/(T1-T2). Le signal S3 a une période instantanée T qui varie avec la gigue du signal S1. Ainsi, la mesure de la période T, c'est à dire de la durée de la période T, est représentative de la gigue du signal S1.

La source d'entropie 100 est une structure par exemple désignée par le sigle COSO (de l'anglais "COherent Sampling ring Oscillator" - oscillateur en anneau à échantillonnage cohérent), qui est utilisée dans les circuits générateurs de nombres aléatoire à oscillateur en anneau à échantillonnage cohérent (COSO TRNG de l'anglais " COherent Sampling ring Oscillator True Random Number Generator").

Pour mesurer la période T du signal S3, le circuit 1 comprend un circuit (ou compteur) COUNTER. Le circuit COUNTER est configuré pour fournir, pour chaque période T du signal S3, une valeur N, par exemple sous la forme d'un mot numérique, égale au nombre de périodes T2 du signal S2 comptées pendant la période T du signal S3. Dit autrement, le circuit COUNTER est configuré pour mesurer la durée de chaque période T du signal S3 en nombre N de périodes T2 du signal S2.

A titre d'exemple, le circuit COUNTER comprend une entrée de remise à zéro recevant le signal S3, une entrée de synchronisation C recevant le signal S2 et une sortie O fournissant les valeurs N comptées. A chaque début de période T2 du signal S2, par exemple à chaque front montant du signal S2, le circuit COUNTER incrémente la valeur courante de comptage d'une unité. A chaque début de période T du signal S3, par exemple à chaque front montant du signal S3, le circuit COUNTER réinitialise la valeur courante de comptage à zéro. De préférence, la valeur N disponible en sortie du circuit COUNTER, sur la sortie O, est mise à jour à partir de la valeur courante de comptage à chaque début de période du signal S3, juste avant que cette valeur courante de comptage soit remise à zéro. Dit autrement, la valeur N disponible en sortie du circuit COUNTER est mise à jour à chaque début de période T du signal S3 avec la valeur du nombre de période T2 du signal S2 comptés lors de la période T précédente.

Le dispositif 1 comprend en outre un circuit Nm CTRL. Le circuit FB CTRL est configuré pour commander ou modifier la période d'au moins l'un des deux oscillateurs RO1 et RO2 de sorte que l'écart entre les périodes T1 et T2 soit égal à un écart cible. La modification de la période T1 de l'oscillateur RO1 et/ou de la période T2 de l'oscillateur RO2 par le circuit Nm CTRL est mise en œuvre sur la base des valeurs N de sortie du circuit COUNTER. Par exemple, pour une valeur cible Nmt du nombre moyen de Nm de périodes T2 par période T du signal S3, si la valeur de sortie N est inférieure à Nmt, l'écart entre les périodes T1 et T2 est réduit, et si la valeur de sortie N est supérieure à Nmt, l'écart entre les périodes T1 et T2 est augmenté.

Selon un mode de réalisation, les deux oscillateurs RO1 et RO2 sont mis en œuvre en technologie métal-oxyde-semiconducteur complémentaire (CMOS de l'anglais "Complementary Metal Oxide Semiconductor") sur semiconducteur sur isolant complètement déplété (FDSOI de l'anglais "Fully Depleted Semiconductor On Insulator"), de préférence sur silicium sur isolant complètement déplété ("Fully Depleted Silicon On Insulator"). Dans un tel mode de réalisation, de préférence, la modification de la période T1 de l'oscillateur RO1, respectivement de la période T2 de l'oscillateur RO2, est mise en œuvre en commandant les grilles arrière d'au moins un élément à retard, par exemple un inverseur, de l'oscillateur RO1, respectivement RO2.

Dans des variantes de réalisation, que les oscillateurs RO1 et RO2 soient ou non mis en œuvre en CMOS sur FDSOI, la modification de la période T1 de l'oscillateur RO1, respectivement de la période T2 de l'oscillateur RO2, est mise en œuvre autrement, par exemple en sélectionnant un chemin de propagation d'une oscillation parmi plusieurs possibles, ou en modifiant les conditions d'alimentations de l'oscillateur. A titre d'exemple, l'article de A. Peetermans, V. Rozic, et I. Verbauwheden intitulé "A Highly-Portable True Random Number Generator Based on Coherent Sampling", publié en 2019 dans 29th International Conference on Field Programmable Logic and Applications (FPL), décrit un exemple de réglage des périodes relatives de deux oscillateurs en anneau qui n'est pas basé sur l'utilisation de grille arrière d'au moins un élément à retard, par exemple un inverseur, de l'oscillateur RO1, respectivement RO2.

Toutefois, l'utilisation des grilles arrière pour moduler la période d'au moins l'un des oscillateurs RO1 et RO2 lorsque ceux-ci sont mis en œuvre en CMOS sur FDSOI permet une plus grande dynamique de réglage et une meilleure précision de réglage de l'écart entre les périodes T1 et T2.

Dans l'exemple de la figure 1, le circuit Nm CTRL commande uniquement la période T2 de l'oscillateur RO2 au moyen d'un signal de commande CTRL T2. Dans une variante de réalisation, comme cela est illustré par des traits en pointillés en figure 1, le circuit Nm CTRL commande en outre la période T1 de l'oscillateur RO1 au moyen d'un signal de commande CTRL T1. Dans une autre variante non illustrée, le circuit Nm CTRL commande uniquement la période T1 de l'oscillateur RO1 au moyen du signal CTRL T2.

Dans le dispositif 1, dans chacun des oscillateurs RO1 et RO2, le rapport R entre la période de l'oscillateur et sa gigue est déterminable et dépend de la technologie de mise en œuvre des oscillateurs. Par exemple, lorsque les oscillateurs sont mis en œuvre en CMOS sur FDSOI, ce rapport R est de l'ordre de 1000. En pratique, pour une technologie donnée, ce rapport peut être obtenu par une phase de caractérisation, par exemple d'une pluralité de circuits.

En outre, dans le dispositif 1, la précision de mesure est déterminée par la différence entre les périodes T1 et T2. Plus concrètement, la précision de mesure est égale à 1/Nm.

Une précision de mesure suffisante est, par exemple, obtenue lorsque Nm est égal sensiblement égal à R. Toutefois, dans d'autres exemples, une précision de mesure où Nm est inférieure à R peut être suffisante, par exemple une précision de mesure où Nm est égale à R/10 peut être suffisante. La personne du métier est en mesure de déterminer une précision de mesure cible en fonction de l'application. Par exemple, pour deux oscillateurs RO1 et RO2 ayant des périodes T1 et T2 égales à 2 ps, pour avoir une précision de mesure de 1/1000, l'écart entre les périodes T1 et T2 doit être fixé par le circuit Nm CTRL à 2 ns, c'est à dire que le circuit Nm CTRL doit, par exemple, fixer la période de l'oscillateur RO1 à 2,002 ns et celle de l'oscillateur RO2 à 2,000 ns.

On comprend alors que la précision de commande des périodes T1 et/ou T2 des oscillateurs par le circuit Nm CTRL est déterminée par la précision de mesure cible. En reprenant l'exemple de cas décrit ci-dessus, pour des oscillateurs RO1 et RO2 mis en œuvre en CMOS sur FDSOI, les signaux de commande CTRL T1 et CTRL T2 des grilles arrière doivent pouvoir être modifiés avec une précision de l'ordre du mV pour obtenir l'écart cible égal à 2 ns dans cet exemple.

En pratique, le réglage de l'écart entre les périodes moyennes des signaux S1 et S2 permet que les valeurs N de sortie du circuit COUNTER varient autours de la valeur Nm en fonction de la gigue de l'oscillateur RO1 qui est accumulée sur Q égal Nm périodes du signal T2.

Le réglage de la valeur moyenne Nm de sortie du compteur COUNTER par le circuit Nm CTRL correspond, par exemple, à une première étape d'une phase de réglage.

Le dispositif 1 comprend en outre un circuit PROCESS. Le circuit PROCESS est configuré, une fois que la période moyenne Tm a été réglée par le circuit Nm CTRL, pour déterminer une valeur K d'accumulation des valeurs N de sortie du compteur COUNTER, de sorte que l'accumulation Q de la gigue (égale à K*Nm) soit suffisante, d'une part, pour que l'entropie d'un bit aléatoire généré à partir de l'accumulation de K valeurs N successives soit supérieure à une entropie minimale, et, d'autre part, pour que l'autocorrélation liée au bruit de scintillement soit nulle ou, au moins, considérée comme négligeable. Cette détermination de la valeur du nombre entier K correspond, par exemple, à une deuxième phase de l'étape de réglage qui est mise en œuvre après la première phase de l'étape de réglage.

Plus particulièrement, le circuit PROCESS est configuré pour d'abord initialiser la valeur courante du nombre K, c'est à dire pour que la valeur courante du nombre K soit mise à une valeur initiale. A titre d'exemple, la valeur initiale du nombre K est comprise entre 1 et 1000, par exemple égale à 10.

Le circuit PROCESS est en outre configuré pour accumuler K valeurs N successives. Dit autrement, le circuit PROCESS est configuré pour calculer des sommes de K valeurs N successives du compteur COUNTER. Par exemple, à chaque fois que le circuit COUNTER fournit une valeur N représentative d'un nombre de périodes du signal S2 comptées pendant une période du signal S3, le circuit PROCESS ajoute cette valeur N à des valeurs N précédentes, jusqu'à avoir sommé K valeurs N successives.

Par exemple, en figure 1, dans le circuit PROCESS, la fonction d'accumulation de K valeurs N successives est représentée sous la forme d'un bloc fonctionnel ACC recevant les valeurs N et une indication de la valeur courante du nombre K, par exemple recevant le nombre K, et fournissant des valeurs VAL correspondant à des sommes (accumulations) VAL de K valeurs N successives. Dit autrement, le bloc ACC est configuré pour calculer des sommes VAL de K valeurs N successives. Par exemple, chaque mise à jour de la valeur VAL correspond au résultat d'une accumulation de K valeurs N successives. A titre d'exemple, chaque valeur VAL correspond à l'accumulation de la gigue de l'oscillateur RO1 (signal S1) sur Q=Nm*K période du signal S2.

A titre d'exemple, les valeurs N de sortie du compteur sont fournies par le circuit COUNTER sous la forme de mots numériques sur plusieurs bits. De préférence, les sommes VAL calculées sont fournies par le bloc ACC sous la forme de mots numériques sur plusieurs bits.

A titre d'exemple, le bloc fonctionnel ACC est mis en œuvre par un circuit accumulateur recevant les valeurs N et l'indication de la valeur courante de K, et fournissant les sommes VAL.

Le circuit PROCESS est en outre configuré pour calculer, à partir des sommes VAL, une variance d'Allan. Dit autrement, le circuit PROCESS est configuré pour calculer une variance d'Allan sur les sommes VAL. Cette fonction du circuit PROCESS est représenté en figure 1 par un bloc fonctionnel VAR CALC recevant les valeurs VAL et fournissant une valeur VAR de variance d'Allan. A titre d'exemple, ce bloc VAR CALC est mis en œuvre par un circuit correspondant, par exemple par un circuit numérique correspondant.

A titre d'exemple, pour calculer la variance d'Allan VAR sur les valeurs VAL, le bloc VAR CALC est configuré pour soustraire une valeur VAL courante à une valeur VAL-1 correspondant à la valeur VAL obtenue avant la valeur VAL courante. Cette fonction de soustraction est représentée en figure 1 sous la forme d'un bloc fonctionnel SUB recevant les deux valeurs successives VAL et VAL-1, et fournissant le résultat RES de la soustraction entre ces deux valeurs successives. A titre d'exemple, le bloc SUB est mis en œuvre par un circuit correspondant, par exemple un circuit soustracteur numérique.

A titre d'exemple, les valeurs VAL-1 sont obtenues en retardant les valeurs VAL, comme cela est illustré en figure 1 par un bloc fonctionnel DT recevant les valeurs VAL et fournissant les valeurs VAL-1. A titre d'exemple, le bloc DT est mis en œuvre par un circuit correspondant, par exemple un registre à décalage, par exemple un registre à décalage de type FIFO (de l'anglais "First In First Out" - premier entré premier sortie) de profondeur 1, dans lequel les décalages sont mis en œuvre à chaque mise à jour du signal VAL.

A titre d'exemple, le circuit VAR CALC calcule la variance d'Allan VAR à partir des différences RES entre les valeurs VAL-1 et VAL comme cela est illustré en figure 1 par un bloc fonctionnel CALC recevant les différences RES et fournissant la variance d'Allan calculée VAR. A titre d'exemple, le bloc CALC est mis en œuvre par un circuit correspondant, par exemple par un circuit numérique correspondant.

Le circuit PROCESS est configuré pour comparer la variance d'Allan VAR calculée sur les accumulations VAL de K valeurs N de sortie successives du circuit COUNTER à un seuil TH, comme cela est illustré en figure 1 par un bloc fonctionnel SUP TH recevant la variance calculée VAR et fournissant une indication UP du résultat de la comparaison de la variance calculée à un seuil TH. A titre d'exemple, le bloc SUP TH est mis en œuvre par un circuit, de préférence numérique, correspondant recevant le signal VAR et fournissant le signal UP, par exemple sous la forme d'un signal binaire dont l'état indique si la variance VAR est supérieure ou inférieure au seuil TH.

Plus particulièrement, le seuil TH est égal au plus grand seuil parmi un seuil TH1 et TH2.

Le seuil TH1 est déterminé par une entropie cible d'un bit aléatoire OUT fourni par le circuit PROCESS. Ce bit OUT correspond au bit de poids faible des sommes VAL de K valeurs N successive. Par exemple, pour une entropie cible de valeur donnée, la variance d'Allan correspondant à cette entropie cible est calculée et le seuil TH1 est alors égal à cette variance d'Allan calculée. Par exemple, l'article de M. Baudet, D. Lubicz, J. Micolod, et A. Tassiaux, intitulé « On the Security of Oscillator-Based Random Number Generators », et publié dans J Cryptol, vol. 24, no 2, p. 398-425, avr. 2011, donne un modèle de référence adapté aux valeurs N du circuit COUNTER qui indique que la variance VAR doit être supérieur au seuil TH1 pour que l'entropie du bit OUT soit supérieure à l'entropie cible. Dit autrement, ce modèle permet de calculer, pour l'entropie cible, la valeur du seuil TH1 de variance telle que l'entropie du bit OUT soit supérieure à l'entropie cible lorsque la variance VAR calculée est supérieure au seuil TH1. A titre d'exemple, pour une entropie cible égale à 0.0997, le seuil TH1 est égal à 0.538. A titre d'exemple, avoir une entropie du bit OUT supérieure à 0.997 est une condition requise pour respecter la norme AIS-31.

Le seuil TH2 est déterminé par un seuil d'autocorrélation sur le bit OUT. En effet, comme cela a été indiqué précédemment, l'article " Impact of the Flicker Noise on the Ring Oscillator-based TRNGs " montre que l'autocorrélation liée au bruit de scintillement peut être reliée à la variance d'Allan, et que cette autocorrélation est nulle ou négligeable lorsque la variance calculée VAR est supérieure à un seuil. A titre d'exemple, pour un seuil TH2 égal à 0,25, l'autocorrélation liée au bruit de scintillement est nulle. Par exemple, le seuil TH2 est égale à la variance d'Allan sur les valeurs accumulées lorsque cette variance d'Allan est supérieure ou égale au carré de la moitié de la période moyenne des oscillateurs.

En prenant le seuil TH égal au plus grand des seuils TH1 et TH2, si la variance VAR calculée est supérieure au seuil TH, cela signifie que l'accumulation Q égale à Nm.K, donc que la valeur courante de K, est suffisante pour que l'autocorrélation du bit OUT liée au bruit de scintillement soit nulle ou négligeable et pour que l'entropie du bit OUT soit supérieure à l'entropie cible.

Ainsi, lorsque la variance d'Allan calculée VAR est supérieure au seuil TH, il n'y a pas besoin de modifier la valeur du nombre K, et la valeur du nombre K est fixée égale à sa valeur courante. Cela marque, par exemple, la fin de la deuxième phase de l'étape de réglage, ou, plus généralement, la fin de l'étape de réglage. Après cette étape de réglage, les bits OUT qui sont fournis par le circuit PROCESS peuvent être utilisés pour la génération de nombres aléatoires, par exemple par un circuit de génération de nombres aléatoires comprenant le dispositif 1 et utilisant les bits OUT pour générer des nombres aléatoires.

A l'inverse, lorsque la variance d'Allan calculée VAR est inférieure au seuil TH, cela signifie qu'au moins l'une des conditions sur l'entropie du bit OUT et sur l'autocorrélation liée au bruit de scintillement n'est pas respectée, et que la valeur Q d'accumulation de la gigue doit être augmentée. Cette augmentation de la valeur d'accumulation Q est mise en œuvre en incrémentant d'un pas donné, par exemple un pas unitaire, la valeur courante de l'accumulation K.

Le circuit PROCESS est donc configuré pour fixer K à sa valeur courante si la variance calculée VAR est supérieure au seuil TH, et pour incrémenter K si la variance calculée VAR est inférieure au seuil TH. Cette fonction du circuit PROCESS est représenté en figure 1 sous la forme d'un bloc fonctionnel K CTRL configuré pour recevoir l'indication UP que la variance calculée VAR est supérieure ou inférieure au seuil TH, et pour incrémenter la valeur courante de l'accumulation si la variance VAR est inférieure au seuil TH, et fixer l'accumulation K à sa valeur courante si la variance VAR est supérieure au seuil TH. A titre d'exemple, le bloc fonctionnel K CTRL fournit l'indication de la valeur courante de l'accumulation K au bloc ACC. A titre d'exemple, le bloc fonctionnel K CTRL est mis en œuvre sous la forme d'un circuit numérique, par exemple sous la forme d'un compteur comprenant la valeur courant de K et incrémentant cette valeur lorsque que cela est nécessaire.

Le circuit PROCESS du dispositif 1 de la figure 1 est plus simple à mettre en œuvre que le circuit PROCESS du dispositif des demandes FR 3134795 et US 202401954. Notamment, il n'est pas nécessaire dans le dispositif 1 présenté ici de d'abord caractériser l'entropie puis de déterminer ensuite une valeur K d'accumulation des valeurs N pour laquelle un bit de sortie respecte une entropie minimale cible. En outre, dans le dispositif 1 présenté ici, le bruit de scintillement peut être une source légitime d'aléa, d'où il résulte que le débit des bits OUT aléatoires fournis par le dispositif 1 peut être augmenté par rapport à celui des bits aléatoires qui sont fournis par le dispositif des demandes de brevet susmentionnées.

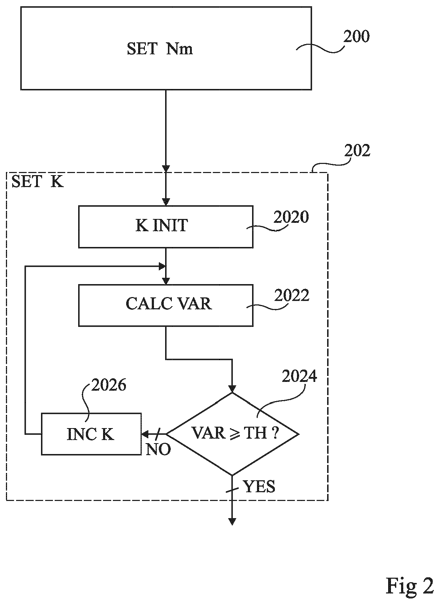

La figure 2 représente, sous la forme d'un organigramme, un mode de réalisation d'un procédé mis en œuvre dans le dispositif 1 de la figure 1. Plus particulièrement, la figure 2 illustre une étape de réglage du dispositif 1 préalable à l'obtention de bits OUT aléatoires respectant les conditions d'entropie minimale cible et d'autocorrélation nulle ou négligeable.

A une première phase ou étape 200 (bloc "SET Nm" en figure 2) de l'étape de réglage, le circuit Nm CTRL commande la période d'au moins l'un des deux oscillateurs RO1 et RO2 de sorte que l'écart entre les périodes moyennes des deux oscillateurs soit égal à un écart cible. Dit autrement, le circuit Nm CTRL commande la période d'au moins l'un des deux oscillateurs RO1 et RO2 de sorte que la valeur moyenne Nm de période du signal S2 pendant une période du signal S3 soit égale à une valeur cible.

A une deuxième phase ou étape 202 (bloc "SET K" en figure 2) de l'étape de réglage, mise en œuvre après l'étape 200, le circuit PROCESS fixe la valeur de l'accumulation K de sorte que les deux conditions susmentionnées soient respectées.

Plus particulièrement, à l'étape 202, la valeur courante de K est initialisée à une étape 2020 (bloc "K INIT" en figure 2). L'initialisation de la valeur courante de K est par exemple mise en œuvre par le circuit PROCESS.

Puis, toujours à l'étape 202, à une étape 2022 (bloc "CALC VAR" en figure 2), le circuit PROCESS calcule des sommes (VAL en figure 1) de K valeurs successives N du compteur COUNTER, et calcule une variance d'Allan (VAR en figure 1) sur ces sommes.

Les étapes 2020 et 2021 correspondent aux étapes mise en œuvre par le bloc fonctionnel ou circuit VAR CALC de la figure 1.

Toujours à l'étape 202, le circuit PROCESS compare la variance d'Allan calculée au seuil TH, à une étape 2024 (bloc "VAR ≥ TH" en figure 2). Cette étape correspond à l'étape mise en œuvre par le bloc fonctionnel ou circuit SUP TH en figure 1.

Si la variance calculée est supérieure au seuil TH (sortie "YES" du bloc 2024), l'étape 202, et, plus généralement, l'étape de réglage du dispositif 1, est terminée. La valeur de K est alors fixée, et des bits aléatoires OUT correspondant au bit de poids faible des sommes de K valeurs N successives sont ensuite fournis par le circuit PROCESS. On comprend de cela que, une fois la valeur courante de l'accumulation K fixée pendant l'étape de réglage, le circuit PROCESS continue à calculer des sommes de K valeurs N successives.

A l'inverse, si la variance calculée est inférieure au seuil TH (sortie "NO" du bloc 2024), l'étape 2024 se poursuit à une étape 2026 (bloc "INC K" en figure 2) lors de laquelle la valeur courante de K est incrémentée. Cette étape correspond à l'étape mise en œuvre par le bloc fonctionnel ou circuit K CTRL de la figure 1.

L'étape 2026 est suivie de l'étape 2022.

Dans le dispositif 1 décrit précédemment, en plus de mettre en œuvre une étape simple de réglage permettant d'obtenir des bits OUT aléatoires respectant les deux conditions relatives à l'entropie et à l'autocorrélation, il peut être souhaitable de détecter des disfonctionnements de la source d'entropie 100. En effet, une fois la valeur de K fixée, la source d'entropie 100 peut présenter différents problèmes qui conduisent à ce que les bits OUT fournis par le circuit PROCESS ne respectent plus les deux conditions relatives à l'entropie et à l'autocorrélation.

Par exemple, le signal S3 peut se bloquer, c'est à dire peut ne plus varier dans le temps de manière périodique avec une période moyenne correspondant à un nombre Nm de périodes du signal S2. Ce blocage du signal S3 peut être le résultat d'un verrouillage des oscillateurs RO1 et RO2 l'un sur l'autre. Ce blocage du signal S3 peut aussi être le résultat d'une attaque du dispositif 1 par un pirate.

A titre d'autre exemple, en raison de variation de température ou d'un vieillissement du dispositif 1, la variance d'Allan sur les sommes de K valeurs N successives de sortie du circuit COUNTER peut redevenir inférieure au seuil TH après que la valeur de K ait été fixée lors de l'étape de réglage.

Il serait donc souhaitable, dans le dispositif 1 de la figure 1, de disposer de moyen permettant de détecter au moins l'un parmi un blocage du signal S3 et une variation de la variance d'Allan en dessous du seuil TH.

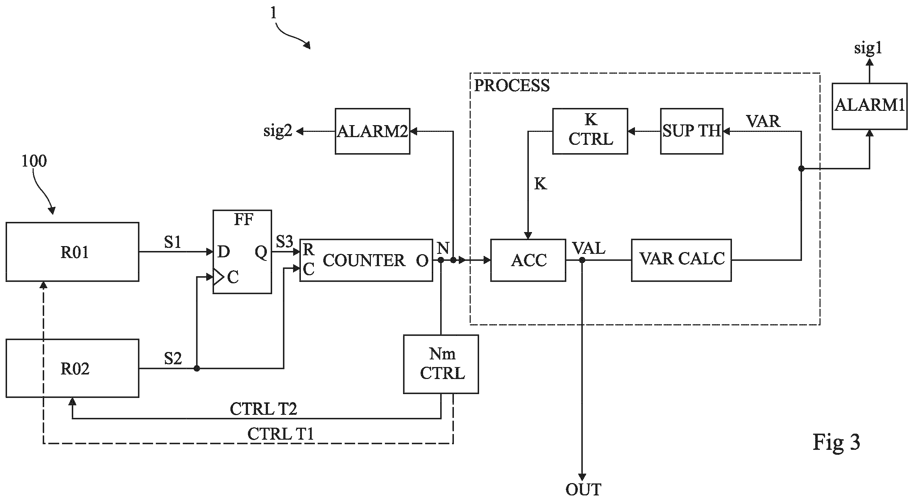

La figure 3 représente, sous la forme d'un schéma bloc, une variante de réalisation du dispositif de la figure 1. Le dispositif 1 de la figure 3 comprend de nombreux éléments en commun avec le dispositif 1 de la figure 1, et seules les différences entre ces deux dispositifs sont ici mises en exergue. En particulier, sauf indication contraire, tout ce qui a été décrit pour le dispositif 1 de la figure 1 reste valable pour le dispositif 1 de la figure 3.

Le dispositif 1 de la figure 3 comprend un circuit ALARM1. Le circuit ALARM1 est configuré pour détecter lorsque la variance d'Allan VAR calculée sur les sommes VAL de K valeurs N successives sort d'une plage déterminée par le seuil TH. Le circuit ALARM1 fournit un signal d'alarme sig1 indiquant lorsque la variance d'Allan VAR sort de cette plage. L'étape de détection que la variance VAR sort de la plage est, de préférence, mise en œuvre après l'étape de réglage ayant permis de fixer la valeur de K.

A titre d'exemple, la plage de valeurs déterminée par le seuil TH s'étend d'une première valeur, de préférence incluse dans la plage de valeurs, à une deuxième valeur, de préférence incluse dans la plage de valeurs. La première valeur est inférieure au seuil TH, par exemple égale à 0.7 fois le seuil TH, de préférence égale à 0.9 fois le seuil TH, et la deuxième valeur est supérieure au seuil TH, par exemple égale à 1.3 fois le seuil TH, de préférence égale à 1.1 fois le seuil TH.

A titre d'exemple alternatif, la plage de valeurs comprend toutes les valeurs supérieures ou égales à une première valeur déterminée par le seuil TH. La première valeur est inférieure au seuil TH, par exemple égale à 0.7 fois le seuil TH, de préférence à 0.9 fois le seuil TH.

Plutôt que de détecter, avec le circuit ALARM1, que la variance calculée VAR sort de la plage de valeurs définie ci-dessus, on aurait pu penser à détecter simplement que la variance calculée VAR est inférieure au seuil TH. Toutefois, en fonctionnement, la variance VAR peut ponctuellement être inférieure au seuil TH sans que cela ne soit le résultat d'un disfonctionnement de la source d'entropie. En effet, en fonctionnement, même en l'absence de disfonctionnement de la source d'entropie, la variance calculée VAR peut prendre des valeurs proches du seuil TH qui seront parfois plus faibles que le seuil TH, parfois plus élevées que le seuil TH. C'est pourquoi, l'utilisation d'une plage de valeur est préférable.

A titre d'exemple, lorsque le circuit ALARM1 fournit le signal sig1 pour indiquer que la variance calculée VAR est sortie de la plage de valeurs déterminée par le seuil TH, l'étape de réglage décrite en relation avec les figures 1 et 2 peut être remise en œuvre, de sorte à fixer une nouvelle valeur de K pour laquelle les bits OUT respecteront les deux conditions relatives à l'entropie et à l'autocorrélation.

On comprend du fonctionnement décrit ci-dessus du circuit ALARM1 que, lorsque le dispositif 1 comprend le circuit ALARM1, le circuit PROCESS est configuré pour calculer la variance d'Allan des sommes VAL de K valeurs N successives après que la valeur de K ait été fixée.

Le dispositif 1 de la figure 3 comprend un en outre un circuit ALARM2. Le circuit ALARM2 est configuré pour détecter un blocage du signal S3. Pour cela, le circuit ALARM2 est configuré pour fournir un signal d'alarme sig2 si une valeur N du compteur COUNTER est supérieure à un seuil déterminé par la valeur moyenne Nm fixée, par le circuit Nm CTRL, lors de l'étape de réglage. Dit autrement, le circuit ALARM2 est configuré pour fournir un signal d'alarme sig2 si une valeur N du compteur COUNTER est supérieure à un seuil déterminé par l'écart cible entre les périodes moyennes des signaux S1 et S2. De préférence, la comparaison des valeurs N au seuil par le circuit ALARM2 est mise en œuvre après la fin de l'étape de réglage décrite en relation avec les figures 1 et 2, c'est à dire après que le circuit Nm CTRL ait fixé la valeur moyenne des périodes des oscillateurs RO1 et RO2.

Le seuil auquel le circuit ALARM2 compare les valeurs N de sortie du compteur COUNTER est supérieur à la valeur Nm fixée. Si une valeur N dépasse ce seuil, cela signifie que le signal S3 est dans une situation de blocage, et le circuit ALARM2 l'indique grâce au signal sig2. A titre d'exemple, ce seuil est égal à 1,5 fois Nm, par exemple à 2 fois Nm.

A titre d'exemple, lorsque le circuit ALARM2 détecte un blocage du signal S3 et l'indique au moyen du signal sig2, le circuit 1 est configuré pour réinitialiser les oscillateurs RO1 et RO2, par exemple en bloquant avec un signal de commande la propagation d'oscillations dans ces oscillateurs avant de permettre à nouveau cette propagation. Après une telle étape de réinitialisation des oscillateurs RO1 et RO2, l'étape de réglage décrite en relation avec les figures 1 et 2 est remise en œuvre.

Bien que l'on ait décrit ci-dessus un dispositif 1 comprenant les deux circuits ALARM1 et ALARM2, dans des variantes non illustré, le dispositif 1 ne comprend que l'un de ces deux circuits ALARM1 et ALARM2. Même dans ces variantes où le dispositif ne comprend qu'un seul des deux circuits ALARM1 et ALARM2, le dispositif 1 présente des avantages par rapport au dispositif 1 de la figure 1 dépourvu des circuits ALARM1 et ALARM2.

A titre d'exemple, bien que cela ne soit pas illustré en figure 3, le dispositif 1 peut comprendre un circuit d'alarme configuré pour détecter une modification dans le fonctionnement du dispositif 1, par exemple résultant d'un vieillissement du dispositif 1. Ce circuit d'alarme est configuré pour calculer, à la fin de la phase de réglage du dispositif 1, une fois la valeur K fixée, une valeur moyenne VARmeans de variance d'Allan sur plusieurs valeurs VAR de variance d'Allan. Ce circuit d'alarme est en outre configuré, une fois la valeur moyenne VARmeans calculée, pour détecter lorsqu'une valeur VAR de variance d'Allan VAR sort d'une plage de valeurs déterminée par la valeur moyenne VARmeans. Cette plage de valeurs s'étend d'une première valeur, de préférence incluse dans la plage de valeurs, à une deuxième valeur, de préférence incluse dans la plage de valeurs. La première valeur est inférieure à la valeur VARmeans, par exemple égale à 0.7 fois la valeur VARmeans, de préférence égale à 0.9 fois la valeur VARmeans, et la deuxième valeur est supérieure au seuil TH, par exemple égale à 1.3 fois la valeur VARmeans, de préférence égale à 1.1 la valeur VARmeans.

En indiquant lorsque la variance d'Allan sort de la plage de valeurs déterminée par la valeur VARmeans, cette alarme indique lorsque le fonctionnement du dispositif 1 s'écarte du fonctionnement fixé à la fin de la phase de réglage. Toutefois, cette alarme peut se déclencher alors que la variance d'Allan est toujours supérieure au seuil TH, c'est à dire alors l'autocorrélation du bit OUT liée au bruit de scintillement est nulle ou négligeable et que l'entropie du bit OUT est supérieure à l'entropie cible.

Par exemple, si on considère un seuil de TH égal à 0.538 et que l'on obtient, après avoir réglé la valeur de K, une valeur moyenne VARmeans égale à 0.7, la plage de valeurs déterminée par la valeur VARmeans s'étend, par exemple, de 0.9 fois VARmeans à 1.1 fois VARmeans. Dans cet exemple, une variance d'Allan égale à 0.6 est inférieure à 0.9 fois VARmeans et déclenche l'alarme, alors que cette même variance d'Allan est supérieure au seuil TH, ce qui indique donc que l'autocorrélation du bit OUT liée au bruit de scintillement est nulle ou négligeable et que l'entropie du bit OUT est supérieure à l'entropie cible. Dit autrement, dans cet exemple, malgré une dérive dans le fonctionnement du dispositif 1, par exemple résultant d'un vieillissement du dispositif 1, ce dispositif 1 reste fonctionnel pour fournir des bits OUT aléatoires avec une entropie supérieure à l'entropie cible.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en oeuvre pratique des modes de réalisation et variantes décrits est à la portée de la personne du métier à partir des indications fonctionnelles données ci-dessus.

## Revendications

1. Dispositif électronique (1) comprenant :
- un premier oscillateur en anneau (RO1) et un deuxième oscillateur en anneau (RO2) ;
- une bascule synchrone (FF) configurée pour fournir un signal de sortie (S3) correspondant à un échantillonnage d'une sortie (S1) du premier oscillateur (RO1) à une fréquence d'une sortie (S2) du deuxième oscillateur (RO2) ;
- un compteur (COUNTER) configuré pour fournir, pour chaque période du signal de sortie (S3) de la bascule (FF), une valeur (N) égale à un nombre de périodes du deuxième oscillateur (RO2) comptées pendant ladite période du signal de sortie (S3) de la bascule (FF) ;
- un premier circuit (Nm CTRL) configuré pour modifier une période d'au moins l'un des deux oscillateurs (RO1, RO2) pour qu'un écart moyen entre les périodes des deux oscillateurs soit égal à un écart cible ; et
- un deuxième circuit (PROCESS) configuré pour :
initialiser une valeur d'un nombre entier K,
calculer des sommes (VAL) de K valeurs successives du compteur (COUNTER),
calculer une variance d'Allan (VAR) sur les sommes calculées (VAL), et
fixer K à sa valeur courante si la variance calculée est supérieure à un premier seuil et incrémenter K sinon,
dans lequel le premier seuil est égal au plus grand d'un deuxième seuil déterminé par une entropie cible sur un bit (OUT) de poids faible des sommes calculées (VAL) et d'un troisième seuil déterminé par un seuil d'autocorrélation sur ledit bit (OUT).

2. Dispositif selon la revendication 1, dans lequel les premier et deuxième oscillateurs en anneau (RO1, RO2) sont identiques, par exemple, par conception.

3. Dispositif selon l'une quelconque des revendications 1 ou 2, dans lequel le premier circuit (Nm CTRL) est configuré pour modifier ladite période dudit au moins l'un des deux oscillateurs (RO1, RO2) sur la base des valeurs (N) du compteur (COUNTER).

4. Dispositif selon l'une quelconque des revendications 1 à 3, dans lequel le troisième seuil est égal à 0.25.

5. Dispositif selon l'une quelconque des revendications 1 à 4, dans lequel le deuxième circuit (PROCESS) comprend un circuit accumulateur (ACC) configuré pour recevoir les valeurs (N) du compteur (COUNTER), une indication de la valeur courante du nombre K et pour fournir lesdits sommes (VAL) sous la forme d'un mot numérique.

6. Dispositif selon l'une quelconque des revendications 1 à 5, dans lequel le dispositif comprend en outre un troisième circuit (ALARM1) configuré pour fournir un premier signal d'alarme (sig1) si la variance calculée est en dehors d'une plage de valeurs déterminée par le premier seuil, la plage de valeurs comprenant, par exemple, toutes les valeurs supérieures ou égales à une première valeur déterminée par le premier seuil, la première valeur étant, par exemple, égale à 0.9 fois le premier seuil.

7. Dispositif selon l'une quelconque des revendications 1 à 6, dans lequel le dispositif comprend en outre un quatrième circuit (ALARM2) configuré pour fournir un deuxième signal d'alarme (sig2) si une valeur (N) du compteur (COUNTER) est supérieure à un seuil déterminé par l'écart cible.

8. Dispositif selon l'une quelconque des revendications 1 à 7, dans lequel les premier et deuxième oscillateurs en anneau (RO1, RO2) sont mis en œuvre en technologie semiconducteur sur isolant, de préférence en technologie semiconducteur sur isolant complètement déplété, et le premier circuit (Nm CTRL) est configuré pour commander (CTRL T1, CTRL T2) des grilles arrière d'au moins un élément à retard dudit au moins l'un des deux oscillateurs (RO1, RO2) pour modifier l'écart moyen entre les périodes des deux oscillateurs.

9. Dispositif (1) selon l'une quelconque des revendications 1 à 8, dans lequel le premier circuit (Nm CTRL) est configuré pour modifier ladite période dudit au moins l'un des deux oscillateurs (RO1, RO2) pendant une première phase d'une étape de réglage.

10. Dispositif (1) selon la revendication 9, dans lequel le deuxième circuit (PROCESS) est configuré pour fixer la valeur du nombre K pendant une deuxième phase de l'étape de réglage, mise en œuvre après la première phase.

11. Générateur de nombres aléatoires comprenant le dispositif selon l'une quelconque des revendications 1 à 10, dans lequel les nombres aléatoires sont générés à partir du bit de poids faible des sommes calculées (VAL).

12. Procédé mis en œuvre dans un dispositif électronique (1) comprenant un premier oscillateur en anneau (RO1) et un deuxième oscillateur en anneau (RO2), une bascule synchrone (FF) configurée pour fournir un signal de sortie (S3) correspondant à un échantillonnage d'une sortie (S1) du premier oscillateur (RO1) à une fréquence d'une sortie (S2) du deuxième oscillateur (RO2), et un compteur (COUNTER) configuré pour fournir, pour chaque période du signal de sortie (S3) de la bascule (FF), une valeur (N) égale à un nombre de périodes du deuxième oscillateur (RO2) comptées pendant ladite période du signal de sortie (S3) de la bascule (FF), le procédé comprenant :
modifier avec un premier circuit une période d'au moins l'un des deux oscillateurs (RO1, RO2) pour qu'un écart moyen entre les périodes des deux oscillateurs soit égal à un écart cible ;
initialiser avec un deuxième circuit (PROCESS) une valeur d'un nombre entier K ;
calculer avec le deuxième circuit (PROCESS) des sommes (VAL) de K valeurs successives du compteur (COUNTER) ;
calculer avec le deuxième circuit (PROCESS) une variance d'Allan (VAR) sur les sommes calculées (VAL) ; et
avec le deuxième circuit (PROCESS), fixer K à sa valeur courante si la variance calculée est supérieure à un premier seuil et incrémenter K sinon,
dans lequel le premier seuil est égal au plus grand d'un deuxième seuil déterminé par une entropie cible sur un bit (OUT) de poids faible des sommes calculées (VAL) et d'un troisième seuil déterminé par un seuil d'autocorrélation sur ledit bit (OUT).

## Patentansprüche

1. Elektronische Einrichtung (1), die Folgendes aufweist:
- einen ersten Ringoszillator (RO1) und einen zweiten Ringoszillator (RO2);
- ein synchrones Flipflop (FF), eingerichtet zum Liefern eines Ausgangssignals (S3), das einer Abtastung eines Ausgangs (S1) des ersten Oszillators (RO1) mit einer Frequenz eines Ausgangs (S2) des zweiten Oszillators (RO2) entspricht;
- einen Zähler (COUNTER), eingerichtet zum Liefern eines Werts (N) für jede Periode des Ausgangssignals (S3) des Flipflops (FF), wobei der Wert (N) gleich einer Anzahl von Perioden des zweiten Oszillators (RO2) ist, die während der genannten Periode des Ausgangssignals (S3) des Flipflops (FF) gezählt wurden;
- eine erste Schaltung (Nm CTRL), eingerichtet zum Modifizieren einer Periode von wenigstens einem der beiden Oszillatoren (RO1, RO2) derart, dass eine mittlere Differenz zwischen den Perioden der beiden Oszillatoren gleich einer Soll-Differenz ist; und
- eine zweite Schaltung (PROCESS), eingerichtet zum:
Initialisieren eines Werts einer Ganzzahl K,
Berechnen von Summen (VAL) aus K aufeinanderfolgenden Werten des Zählers (COUNTER),
Berechnen einer Allan-Varianz (VAR) auf den berechneten Summen (VAL), und Einstellen von K auf seinen aktuellen Wert, falls die berechnete Varianz größer als ein erster Schwellenwert ist, und andernfalls Inkrementieren von K,
wobei der erste Schwellenwert gleich dem höchsten eines zweiten Schwellenwerts, bestimmt durch eine Soll-Entropie eines niederwertigsten Bits (OUT) der berechneten Summen (VAL), und eines dritten Schwellenwerts, bestimmt durch einen Autokorrelationsschwellenwert des genannten Bits (OUT), ist.

2. Einrichtung nach Anspruch 1, wobei die ersten und zweiten Ringoszillatoren (RO1, RO2) identisch sind, beispielsweise konstruktionsbedingt.

3. Einrichtung nach einem der Ansprüche 1 oder 2, wobei die erste Schaltung (Nm CTRL) eingerichtet zum Modifizieren der genannten Periode des genannten wenigstens einen der beiden Oszillatoren (RO1, RO2) auf der Grundlage der Werte (N) des Zählers (COUNTER) ist.

4. Einrichtung nach einem der Ansprüche 1 bis 3, wobei der dritte Schwellenwert gleich 0,25 ist.

5. Einrichtung nach einem der Ansprüche 1 bis 4, wobei die zweite Schaltung (PROCESS) eine Akkumulatorschaltung (ACC) aufweist, eingerichtet zum Empfangen der Werte (N) des Zählers (COUNTER), einer Angabe des aktuellen Werts der Zahl K und zum Ausgeben der genannten Summen (VAL) in Form eines digitalen Worts.

6. Einrichtung nach einem der Ansprüche 1 bis 5, wobei die Einrichtung ferner eine dritte Schaltung (ALARM1) aufweist, eingerichtet zum Liefern eines ersten Alarmsignals (sig1), falls die berechnete Varianz außerhalb eines durch den ersten Schwellenwert bestimmten Wertebereichs liegt, wobei der Wertebereich beispielsweise alle Werte aufweist, die größer als oder gleich einem ersten durch den ersten Schwellenwert bestimmten Wert sind, wobei der erste Wert beispielsweise gleich dem 0,9-Fachen des ersten Schwellenwerts ist.

7. Einrichtung nach einem der Ansprüche 1 bis 6, wobei die Einrichtung ferner eine vierte Schaltung (ALARM2) aufweist, eingerichtet zum Liefern eines zweiten Alarmsignals (sig2), falls ein Wert (N) des Zählers (COUNTER) größer als ein durch die Soll-Differenz bestimmter Schwellenwert ist.

8. Einrichtung nach einem der Ansprüche 1 bis 7, wobei die ersten und zweiten Ringoszillatoren (RO1, RO2) in Halbleiter-auf-Isolator-Technologie, vorzugsweise in vollständig verarmter Halbleiter-auf-Isolator-Technologie, implementiert sind, und wobei die erste Schaltung (Nm CTRL) eingerichtet zum Steuern (CTRL T1, CTRL T2) von Back-Gates wenigstens eines Verzögerungselements des genannten wenigstens einen der beiden Oszillatoren (RO1, RO2) zum Modifizieren der mittleren Differenz zwischen den Perioden der beiden Oszillatoren ist.

9. Einrichtung (1) nach einem der Ansprüche 1 bis 8, wobei die erste Schaltung (Nm CTRL) eingerichtet zum Modifizieren der genannten Periode von wenigstens einem der beiden Oszillatoren (RO1, RO2) während einer ersten Phase eines Einstellschritts ist.

10. Einrichtung (1) nach Anspruch 9, wobei die zweite Schaltung (PROCESS) eingerichtet zum Einstellen des Werts der Zahl K während einer zweiten Phase des Einstellschritts, implementiert nach der ersten Phase, ist.

11. Zufallszahlengenerator, aufweisend die Einrichtung nach einem der Ansprüche 1 bis 10, wobei die Zufallszahlen aus dem niederwertigsten Bit der berechneten Summen (VAL) erzeugt werden.

12. Verfahren, implementiert in einer elektronischen Einrichtung (1), aufweisend einen ersten Ringoszillator (RO1) und einen zweiten Ringoszillator (RO2), ein synchrones Flipflop (FF), eingerichtet zum Liefern eines Ausgangssignals (S3), das einer Abtastung eines Ausgangs (S1) des ersten Oszillators (RO1) mit einer Frequenz eines Ausgangs (S2) des zweiten Oszillators (RO2) entspricht, und einen Zähler (COUNTER), eingerichtet zum Liefern eines Werts (N) für jede Periode des Ausgangssignals (S3) des Flipflops (FF), wobei der Wert (N) gleich einer Anzahl von Perioden des zweiten Oszillators (RO2) ist, die während der genannten Periode des Ausgangssignals (S3) des Flipflops (FF) gezählt wurden, wobei das Verfahren aufweist:
Modifizieren, mit einer ersten Schaltung, einer Periode von wenigstens einem der beiden Oszillatoren (RO1, RO2), sodass eine mittlere Differenz zwischen den Perioden der beiden Oszillatoren gleich einer Soll-Differenz ist;
Initialisieren, mit einer zweiten Schaltung (PROCESS), eines Werts einer Ganzzahl K;
Berechnen, mit der zweiten Schaltung (PROCESS), von Summen (VAL) aus K aufeinanderfolgenden Werten des Zählers (COUNTER);
Berechnen, mit der zweiten Schaltung (PROCESS), einer Allan-Varianz (VAR) auf den berechneten Summen (VAL); und
Einstellen von K auf seinen aktuellen Wert mit der zweiten Schaltung (PROCESS), falls die berechnete Varianz größer als ein erster Schwellenwert ist, und andernfalls Inkrementieren von K,
wobei der erste Schwellenwert gleich dem höchsten eines zweiten Schwellenwerts, bestimmt durch eine Soll-Entropie eines niederwertigsten Bits (OUT) der berechneten Summen (VAL), und eines dritten Schwellenwerts, bestimmt durch einen Autokorrelationsschwellenwert des genannten Bits (OUT), ist.

## Claims

1. Electronic device (1) comprising:
- a first ring oscillator (RO1) and a second ring oscillator (RO2);
- a synchronous flip-flop (FF) configured to deliver an output signal (S3) corresponding to a sampling of an output (S1) of the first oscillator (RO1) at a frequency of an output (S2) of the second oscillator (RO2);
- a counter (COUNTER) configured to deliver, for each period of the output signal (S3) of the flip-flop (FF), a value (N) equal to a number of periods of the second oscillator (RO2) counted during said period of the output signal (S3) of the flip-flop (FF);
- a first circuit (Nm CTRL) configured to modify a period of at least one of the two oscillators (RO1, RO2) so that a mean difference between the periods of the two oscillators is equal to a target difference; and
- a second circuit (PROCESS) configured to:
initialize a value of an integer K,
calculate sums (VAL) of K successive values of the counter (COUNTER),
calculate an Allan variance (VAR) on the calculated sums (VAL), and
set K to its current value if the calculated variance is greater than a first threshold, and increment K otherwise, wherein the first threshold is equal to the highest of a second threshold determined by a target entropy on a least significant bit (OUT) of the calculated sums (VAL) and of a third threshold determined by an autocorrelation threshold on said bit (OUT).

2. Device according to claim 1, wherein the first and second ring oscillators (RO1, RO2) are identical, for example, by design.

3. Device according to any of claims 1 or 2, wherein the first circuit (Nm CTRL) is configured to modify said period of said at least one of the two oscillators (RO1, RO2) based on the values (N) of the counter (COUNTER).

4. Device according to any of claims 1 to 3, wherein the third threshold is equal to 0.25.

5. Device according to any of claims 1 to 4, wherein the second circuit (PROCESS) comprises an accumulator circuit (ACC) configured to receive the values (N) of the counter (COUNTER), an indication of the current value of number K, and to output said sums (VAL) in the form of a digital word.

6. Device according to any of claims 1 to 5, wherein the device further comprises a third circuit (ALARM1) configured to deliver a first alarm signal (sig1) if the calculated variance is outside a range of values determined by the first threshold, the range of values comprising, for example, all values greater than or equal to a first value determined by the first threshold, the first value being, for example, equal to 0.9 time the first threshold.

7. Device according to any of claims 1 to 6, wherein the device further comprises a fourth circuit (ALARM2) configured to deliver a second alarm signal (sig2) if a value (N) of the counter (COUNTER) is greater than a threshold determined by the target difference.

8. Device according to any of claims 1 to 7, wherein the first and second ring oscillators (RO1, RO2) are implemented in semiconductor-on-insulator technology, preferably in fully depleted semiconductor-on-insulator technology, and the first circuit (Nm CTRL) is configured to control (CTRL T1, CTRL T2) back gates of at least one delay element of said at least one of the two oscillators (RO1, RO2) to modify the mean difference between the periods of the two oscillators.

9. Device (1) according to any of claims 1 to 8, wherein the first circuit (Nm CTRL) is configured to modify said period of at least one of the two oscillators (RO1, RO2) during a first phase of a setting step.

10. Device (1) according to claim 9, wherein the second circuit (PROCESS) is configured to set the value of number K during a second phase of the setting step, implemented after the first phase.

11. Random number generator comprising the device according to any of claims 1 to 10, wherein the random numbers are generated from the least significant bit of the calculated sums (VAL).

12. Method implemented in an electronic device (1) comprising a first ring oscillator (RO1) and a second ring oscillator (RO2), a synchronous flip-flop (FF) configured to deliver an output signal (S3) corresponding to a sampling of an output (S1) of the first oscillator (RO1) at a frequency of an output (S2) of the second oscillator (RO2), and a counter (COUNTER) configured to deliver, for each period of the output signal (S3) of the flip-flop (FF), a value (N) equal to a number of periods of the second oscillator (RO2) counted during said period of the output signal (S3) of the flip-flop (FF), the method comprising:
modifying with a first circuit a period of at least one of the two oscillators (RO1, RO2) so that an average difference between the periods of the two oscillators is equal to a target difference;
initializing with a second circuit (PROCESS) a value of an integer K;
calculating with the second circuit (PROCESS) sums (VAL) of K successive values of the counter (COUNTER);
calculating with the second circuit (PROCESS) an Allan variance (VAR) on the calculated sums (VAL); and
with the second circuit (PROCESS), setting K to its current value if the calculated variance is greater than a first threshold, and incrementing K otherwise,
wherein the first threshold is equal to the highest of a second threshold determined by a target entropy on a least significant bit (OUT) of the calculated sums (VAL) and of a third threshold determined by an autocorrelation threshold on said bit (OUT).
